# EUROPÄISCHE PATENTSCHRIFT

(11) **EP 3 293 042 B1**
(45) Veröffentlichungstag und Bekanntmachung des Hinweises auf die Patenterteilung: **17.07.2019**
(21) Anmeldenummer: 17001344.5
(22) Anmeldetag: 07.08.2017
(51) Int. Cl.: B60N 2/56

(54) **FAHRZEUGSITZ**
VEHICLE SEAT
SIÈGE DE VÉHICULE

(30) Priorität: 07.09.2016 DE 202016005441 U
(43) Veröffentlichungstag der Anmeldung: 14.03.2018
(73) Patentinhaber: I.G. Bauerhin GmbH, 63584 Gründau (DE)
(72) Erfinder: Bauer, Stefan, 63755 Alzenau-Michelbach (DE); Schleucher, Thorsten, 63594 Hasselroth (DE)
(74) Vertreter: Grimm, Ekkehard

(56) Entgegenhaltungen:
- EP-A2- 2 423 040
- DE-A1-102014 217 138
- US-A1- 2003 186 642

## Beschreibung

Die vorliegende Erfindung betrifft einen Fahrzeugsitz gemäß dem Oberbegriff des Anspruchs 1. Ein derartiger Fahrzeugsitz der aus der EP-A-2423040 bekannt ist, weist sowohl ein Sitzkissenteil als auch ein Rückenlehnenteil auf. Jedes dieser Teile besitzt eine Polsterung in Form eines Polsterelements. Für eine Sitzklimatisierung ist zumindest das eine Teil mit einer Klimatisierungseinrichtung ausgestattet. Für diese Klimatisierung ist das Sitzkissenteil und/oder das Rückenlehnenteil mit einem Klimaeinleger, der einen Luftverteilungsraum aufweist, ausgestattet, dem über eine Lüftereinheit Luft zugeführt wird oder aus dem über eine Lüftereinheit Luft abgesaugt wird. Der Klimaeinleger ist auf der einen Seite, die dem Benutzer zugewandt ist, durch mindestens eine Oberseitenschicht begrenzt. Auf der dieser Oberseitenschicht gegenüber liegenden Unterseite wird dem Luftverteilungsraum Luft zugeführt oder abgesaugt, die dann aus der Oberseitenschicht abgegeben oder von dieser abgesaugt wird.

Ein Fahrzeugsitz mit einer Klimatisierungseinrichtung ist in der DE 20 2014 009 326 U1 beschrieben. Diese Klimatisierungseinrichtung umfasst einen Klimaeinleger, der in eine Ausnehmung auf der einem Insassen zugewandten Seite eines Polsterkerns eingelegt ist, mit einem auf der einem Insassen zugewandten Seite des Klimaeinleger angeordneten, luftdurchlässigen, die Sitzfläche abdeckenden Polsterbezug und mit einem Lüfter, der zumindest teilweise in eine Vertiefung auf der dem Insassen zugewandten Seite des Polsterkerns eingesetzt ist. Der Lüfter saugt Luft aus Teilbereichen der Sitzfläche an und führt Teilbereichen der Sitzfläche Luft zu. Zumindest ein Teil der Luftführung zwischen Lüfter und Polsterbezug erfolgt über eine Luftverteilungsschicht des Klimaeinlegers. Der Klimaeinleger ist quer oder längs zur Sitzrichtung gesehen in mindestens einen ersten Flächenabschnitt und in mindestens einen zweiten Flächenabschnitt unterteilt, wobei der mindestens eine erste und der mindestens eine zweite Flächenabschnitt strömungstechnisch voneinander getrennt sind. Hierbei weist der erste Flächenabschnitt die Luftverteilungsschicht auf und diese Luftverteilungsschicht des ersten Flächenabschnitts steht mit der Saugseite des Lüfters in Verbindung. Der Lüfter gibt zumindest einen Teil der über den ersten Flächenabschnitt angesaugten Luft über den zweiten Flächenabschnitt an die Sitzfläche ab.

Ein weiterer Fahrzeugsitz mit einer Klimatisierungseinrichtung ist aus der DE 10 2012 006 074 A1 bekannt. Der Kraftfahrzeugsitz umfasst ein als geschlossene Schale ausgebildetes Wannenteil, in das eine Polsterung eingesetzt ist, die auf der einer einem Fahrzeuginsassen zugeordneten Fläche mit einer Luftverteilungsschicht, abgedeckt durch einen luftdurchlässigen Bezug, belegt ist. Die Luftverteilungsschicht besitzt über ihre gesamte Fläche eine gleichbleibende Struktur. Der Luftverteilungsschicht wird über einen Lüfter, der auf der Unterseite der Polsterung, ebenfalls innerhalb des Wannenteils, angeordnet ist, Luft über Luftführungskanäle in der Polsterung zugeführt. Der Verteilungsraum, der zwischen dem Lüfter und den Luftführungskanälen zur Verteilung der Luft auf die Luftführungskanäle angeordnet ist, wird auf der Unterseite durch den Boden des Wannenteils begrenzt. Diese Luftführungskanäle erstrecken sich durch die Polsterung bzw. Polsterschicht von der Unterseite bis zur Oberseite. Während den beiden äußeren Bereichen Luft über die Luftführungskanäle zugeführt wird, wird aus einem mittleren Bereich der Luftverteilungsschicht Luft über den Lüfter angesaugt.

Die DE 20 2012 010 708 U1 beschreibt eine Baugruppe für die Klimatisierung eines Fahrzeugsitzes mit einem Polsterelement, das in einer Ausführungsform von einer Luftverteilungsschicht, die in zwei Luftverteilungsräume unterteilt ist, abgedeckt ist. Während sich diese Luftverteilungsschicht somit auf der Oberseite, d. h. auf der A-Seite, des Polsterelements befindet, ist die Belüftungseinheit mit der Luftfördereinrichtung (Lüfter) auf der Unterseite des Polsterelements, d. h. auf der B-Seite, positioniert. Somit zirkuliert die Luft von der Oberseite des Polsterelements zu der an der Unterseite des Polsterelements angeordneten Luftfördereinrichtung über Luftkanäle, die durch das Polsterelement hindurchführen.

Die DE 20 2013 006 135 U1 beschreibt eine Klimatisierungseinrichtung für einen Fahrzeugsitz mit einem Abstandsmaterial, das auf seiner Oberseite mit einer Oberseitenschicht und auf seiner Unterseite mit einer Unterseitenschicht, die im Wesentlichen für Luft undurchlässig ist, abgedeckt ist. Die Oberseitenschicht und die Unterseitenschicht sind um den Außenumfang herum über eine rahmenförmige Einlage, die den Luftverteilungsraum auf der Außenseite begrenzt, verbunden, indem die Oberseitenschicht auf der oberen Seite und die Unterseitenschicht auf der unteren Seite der rahmenförmigen Einlage, beispielsweise durch Verklebung, verbunden sind.

Die DE 203 21 141 U1 beschreibt einen Einsatz zum Belüften eines Fahrzeugsitzes, der unterhalb des Bezugs eines Sitzkissens oder einer Rückenlehne angeordnet wird. Der Einsatz besitzt ein Abstandsmaterial, das an seiner Unterseite durch eine Barriereschicht abgedeckt ist, wobei diese Barriereschicht an dem Abstandsmaterial mittels einer Klebeschicht befestigt ist. Auf der Oberseite ist das Abstandsmaterial durch eine weitere Barriereschicht abgedeckt, die wiederum mit einer Klebeschicht an dem Abstandsmaterial befestigt ist. Auf der Barriereschicht ist, wiederum über eine Klebeschicht, eine Heizungsschicht befestigt, die ihrerseits durch eine Pufferschicht bedeckt ist. In den Schichten oberhalb des Abstandsmaterials befinden sich Durchgangslöcher. Das Abstandsteil mit den darauf angeordneten Schichten besitzt einen Fortsatz, der dazu dient, über einen von der Sitzfläche oder der Rückenlehnenfläche entfernt angeordneten Lüfter Luft zuzuführen.

Die DE 10 2005 014 333 A1 bezieht sich auf einen klimatisierten Sitz und eine Klimatisierungseinrichtung. Die Klimatisierungseinrichtung umfasst eine unterhalb der Oberfläche der Sitzfläche oder unterhalb der Fläche der Lehne angeordnete Klimamatte, die mit einer Luftführungseinrichtung, beispielsweise einem Lüfter, in Verbindung steht. Die Klimamatte ist als Sack aus einem im Wesentlichen luftundurchlässigen Material aufgebaut, wobei der Sack an seiner Oberseite Luftdurchlassöffnungen aufweist.

Die DE 10 2006 004 465 A1 beschreibt ein Einlegerteil für einen klimatisierten Fahrzeugsitz. Das Einlegerteil umfasst mindestens eine luftdurchlässige obere Decklage, eine darunterliegende, dreidimensionale Luftverteilungsschicht und mindestens eine untere Decklage, die mindestens einen Lufteinlass umfasst. Die obere Decklage und die untere Decklage sind entlang einer seitlich umlaufenden Kante der Luftverteilungsschicht miteinander verbunden. An der unteren Decklage ist eine Lüftereinheit angeordnet, über die der Luftverteilungsschicht Luft zugeführt wird.

Der vorliegenden Erfindung liegt die Aufgabe zugrunde, einen Fahrzeugsitz mit einer Klimatisierungseinrichtung für ein Sitzkissenteil und/oder ein Rückenlehnenteil zu schaffen, bei dem eine gezielte Verteilung der Luft über den Luftverteilungsraum auf die verschiedenen Flächenbereiche des Sitzkissenteils und/oder des Rückenlehnenteils ermöglicht wird, ohne dass eine aufwändige Luftführungsstruktur zwischen Lüfter und Luftverteilungsraum erforderlich ist.

Gelöst wird diese Aufgabe durch einen Fahrzeugsitz mit den Merkmalen des Anspruchs 1. Vorteilhafte Ausgestaltungen des Fahrzeugsitzes sind in den abhängigen Ansprüchen angegeben.

Der erfindungsgemäße Fahrzeugsitz ist dadurch gekennzeichnet, dass der Luftverteilungsraum durch mindestens ein Trennelement, das auch als Stegelement bezeichnet werden kann, das sich zwischen der Oberseitenschicht und der Unterseite erstreckt, in mindestens zwei Teilbereiche unterteilt ist. Die Luftaustrittsplatte, die der Lüftereinheit zugeordnet ist, weist mindestens eine Luftaustrittsöffnung auf, die sich derart an die der Unterseite des Luftverteilungsraums zugeordnete Ebene des Trennelements anlegt, dass die mindestens eine Luftaustrittsöffnung Luft sowohl dem einen als auch dem anderen Teilbereich zuführt. Dadurch sind keine langen und folglich konstruktiv aufwändigen Luftführungsstrukturen erforderlich, die die Luft zwischen Lüftereinheit und den Bereichen des Luftverteilungsraums verteilen. Die Aufteilung der Luft, die von dem Lüfter abgegeben wird, oder auch angesaugt wird, erfolgt unmittelbar über die Luftaustrittsplatte. Die Luftaustrittsplatte ist derart dem Trennelement zugeordnet, dass im Bereich der Luftaustrittsplatte die Luft auf die mindestens zwei Luftverteilungsräume, die durch das Trennelement voneinander abgetrennt sind, verteilt wird.

Es ist vorgesehen, dass der Luftverteilungsraum durch mehrere Trennelemente in mehrere Teilbereiche unterteilt ist. In einer solchen Anordnung ist jeweils das eine Ende der jeweiligen Trennelemente durch die Luftaustrittplatte der Lüftereinheit abgedeckt. Diese einen Enden der jeweiligen Trennelemente sind im Bereich der Luftaustrittsplatte der Lüftereinheit so miteinander verbunden, dass die jeweiligen Teilbereiche voneinander getrennt sind. Dabei ist jedem Teilbereich mindestens eine Luftaustrittsöffnung oder ein Teilbereich einer Luftaustrittsöffnung in der Luftaustrittsplatte zugeordnet. Auch in dieser Anordnung, bei der der Luftverteilungsraum in eine Mehrzahl von Teilbereichen unterteilt ist, werden diese Teilbereiche strömungsmäßig direkt über die Luftverteilungsplatte mit der Lüftereinheit verbunden, ohne dass zusätzliche Strömungswege erforderlich und vorhanden sind.

In einer vorteilhaften Ausgestaltung verlaufen die einen Enden der Trennelemente strahlenförmig von einem gemeinsamen Verbindungspunkt ausgehend, der durch die Luftaustrittsplatte der Lüftereinheit abgedeckt ist. Zwischen jeweils benachbarten Trennelementen, die von dem Verbindungspunkt oder Knotenpunkt ausgehen, wird ein Teilbereich des Luftverteilungsraums gebildet.

Bevorzugt ist vorgesehen, dass die jeweilige Größe der den Teilbereichen zugeordneten Luftaustrittsöffnungen in der Luftaustrittsplatte im Verhältnis zu der Größe des jeweiligen Teilbereichs steht. Dies bedeutet, dass die Größe der jeweiligen Luftaustrittsöffnung in der Luftaustrittsplatte, die einem Teilbereich zugeordnet ist, im Verhältnis zu dem prozentualen Anteil der Größe dieses Teilbereichs zu der gesamten Größe des Luftverteilungsraums gesetzt wird. Unter der Größe eines Teilbereichs und der Größe des Luftverteilungsraums ist die Größe der Fläche zu verstehen, die der Teilbereich und der Luftverteilungsraum aus Sicht auf die Sitzfläche oder die Rückenlehnenfläche besitzt. Hierbei wird davon ausgegangen, dass der Luftverteilungsraum eine gleichbleibende Dicke zwischen Oberseite und Unterseite aufweist. Falls der Luftverteilungsraum eine variierende Dicke zwischen Oberseite und Unterseite besitzt, kann die Größe der jeweiligen einem Teilbereich zugeordneten Luftaustrittsöffnung in der Luftaustrittsplatte im Verhältnis zu dem Volumen des jeweiligen Teilbereichs dimensioniert werden.

Eine Luftaustrittsöffnung in der Luftaustrittsplatte, die mehreren Teilbereichen des Luftverteilungsraums zugeordnet ist, kann durch die den Luftverteilungsraum in die mehreren Teilbereiche unterteilenden Trennelemente in die den jeweiligen Teilbereichen zugeordneten Luftaustrittsöffnungen unterteilt werden.

Die Luftaustrittsplatte kann aus einem beliebigen Material gefertigt sein, so dass die Luftaustrittsplatte bei Belastung durch einen Insassen nicht beschädigt wird und sie in ihrer Funktion nicht beeinträchtigt wird, indem sie sich beispielsweise durch Belastung, ausgelöst durch eine auf der Sitzoberfläche sitzenden Person, durchbiegt. Vorzugsweise besteht die Luftaustrittsplatte aus Kunststoff. Die Luftaustrittsplatte kann aus einem gegossenen Material, einem spritzgegossenem Material oder beidem bestehen. Die Luftaustrittsplatte kann aus Metall sein.

Die Trennelemente, die den Luftverteilungsraum in die Teilbereiche unterteilen, werden bevorzugt durch ein im Wesentlichen luftundurchlässiges Schaumstoffmaterial gebildet. Dadurch sind die Trennelemente in einem gewissen Bereich nachgiebig, so dass sie den Sitzkomfort nicht beeinträchtigen, indem sie nicht wahrgenommen werden. Darüber hinaus tragen sie zur Polsterung bei.

Neben den Trennelementen, die den Luftverteilungsraum in die Teilbereiche unterteilen, können zusätzlich in dem jeweiligen Teilbereich Aussteifungsstege angeordnet werden, die sich zwischen der Oberseitenschicht und der der Unterseite des Luftverteilungsraums zugeordneten Ebene erstrecken und dabei unterstützen, den Querschnitt des jeweiligen Teilbereichs unter Belastung aufrecht zu erhalten.

Der Luftverteilungsraum kann in einer Ausführungsform auf der der Oberseitenschicht gegenüber liegenden Unterseite durch mindestens eine Unterseitenschicht abgedeckt werden, wobei der Bereich, der der/den Luftaustrittsöffnung(en) der Luftaustrittsplatte zugeordnet ist, nicht durch die Unterseitenschicht abgedeckt belassen wird.

In einer vorteilhaften Ausführungsform wird der Luftverteilungsraum um den Außenumfang herum durch einen Rahmen begrenzt. In einer solchen Ausführungsform kann der Klimaeinleger auf ein Polsterelement aufgelegt werden. Es ist aber auch vorgesehen, dass der Klimaeinleger, ob nun mit einem solchen Rahmen oder ohne einen solchen Rahmen, in eine entsprechend angepasste Ausnehmung in dem Polsterelement eingelegt wird. Hierbei können die seitlichen Ränder der Ausnehmung den Luftverteilungsraum seitlich begrenzen, ohne dass zusätzliche Elemente erforderlich sind.

Bei der Verwendung eines solchen um den Außenumfang des Luftverteilungsraums umlaufenden Rahmen wird bevorzugt die Oberseitenschicht, die den Luftverteilungsraum auf der Oberseite abdeckt, mit dem Rahmen verbunden. Gleiches gilt für eine Unterseitenschicht, die dazu vorgesehen ist, den Luftverteilungsraum auf der Unterseite zu begrenzen; auch eine solche Unterseitenschicht wird mit dem Rahmen verbunden.

In einer weiteren Ausführungsform, bei der sowohl mindestens eine Oberseitenschicht als auch mindestens eine Unterseitenschicht den Luftverteilungsraum abdecken, werden diese Oberseitenschicht und diese Unterseitenschicht um den Außenumfang des Luftverteilungsraums herum miteinander verbunden.

Die Oberseitenschicht und/oder die Unterseitenschicht werden vorzugsweise aus Vlies, Nadelvlies, Filz, Gewebe oder Gestricke gebildet. Das Material kann zusätzlich luftundurchlässige Eigenschaften besitzen, indem es mit einer entsprechenden Beschichtung versehen ist. Es ist aber auch vorgesehen, dass das eingesetzte Material, wie Vlies, Nadelvlies, Filz, Gewebe oder Gestricke, eine solche Dichte aufweist, dass es eine Luftdurchdringung verhindert oder diese nur in einem vernachlässigbaren Umfang zulässt. Sollte gerade bei der Oberseitenschicht ein eher luftundurchlässiges Material zum Einsatz kommen, so ist es notwendig, eine geeignete Anzahl von Löchern in das Material einzubringen, damit die Luft entsprechend durchströmen kann. Als luftundurchlässiges Material kann auch eine Kunststofffolie, beispielsweise eine Polyurethanfolie, oder aber auch eine andere Kunststofffolienart, zum Einsatz kommen. Ganz besonders bevorzugt wird für die Oberseitenschicht ein für sich selbst, ohne zusätzlich eingebrachte Löcher, luftdurchlässiges Material, wie Vlies, Nadelvlies, Filz, Gewebe oder Gestricke, verwendet.

Besonders bevorzugt ist eine Anordnung, bei der sich die Lüftereinheit zumindest teilweise in eine durch das Polsterelement führende Öffnung erstreckt. Hierbei kann die Lüftereinheit über die Öffnung in dem Polsterelement Luft ansaugen.

In einer besonders bevorzugten Ausführungsform bildet die Luftaustrittsplatte unmittelbar eine Bodenfläche eines Lüftergehäuses der Lüftereinheit. Wenn darüber hinaus die als Bodenfläche des Lüftergehäuses dienende Luftaustrittsplatte lösbar und damit austauschbar einen Teil des Lüftergehäuses bildet, kann die Lüftereinheit den jeweiligen Anforderungen, die an die Öffnung in der Luftaustrittsplatte gestellt werden, angepasst werden.

Für eine Aussteifung des Luftverteilungsraums können zusätzliche von dem Rahmen und/oder zumindest einem der Trennelemente ausgehende Aussteifungsstege oder Stützstege in dem jeweiligen Teilbereich des Luftverteilungsraums verlaufen. Diese Aussteifungsstege besitzen aber nur eine solche Länge, dass die einzelnen Bereiche zwischen den Aussteifungsstegen des jeweiligen Teilbereichs strömungsmäßig verbunden sind.

Der Rahmen, der den Luftverteilungsraum auf der Außenseite begrenzt, ebenso wie die Aussteifungsstege, werden vorzugsweise aus einem Schaumstoffmaterial gebildet.

In zumindest einem der Teilbereiche kann ein Abstandsmaterial eingesetzt werden, vorzugsweise ein solches, das im Wesentlichen luftdurchlässig ist. In vorteilhafter Weise werden diejenigen Teilbereiche mit einem solchen Abstandsmaterial ausgefüllt, die durch eine auf dem Sitz sitzende Person einer erhöhten Belastung unterworfen werden. Das Abstandsmaterial kann den jeweiligen Teilbereich annähernd vollständig ausfüllen. Als Abstandsmaterial können ein Abstandsgewirke, metallverstärkte Kunststoffspiralen, Schraubenfedern oder aber ein sehr offenporiges Schaummaterial verwendet werden.

Auch wenn vorgesehen ist, dass die Teilbereiche des Luftverteilungsraums durch die Trennelemente voneinander getrennt sind, können dennoch Druckausgleichsöffnungen, die die Teilbereiche miteinander verbinden, vorhanden sein. Solche Druckausgleichsöffnungen sind kleine Unterbrechungen der Trennelemente oder kleine Öffnungen in den Trennelementen. Solche Druckausgleichsöffnung können auch dadurch gebildet werden, dass das Ende des Trennelements von dem Rand des Luftverteilungsraums beabstandet ist.

Falls eine Unterseitenschicht eingesetzt wird, um die Unterseite des Luftverteilungsraums zu begrenzen, sollte diese im Wesentlichen für Luft undurchlässig sein. Da allerdings eine solche Unterseitenschicht auf dem Polsterelement aufliegt, könnte auch eine solche Unterseitenschicht verwendet werden, die im Wesentlichen für Luft durchlässig ist.

Das Material des Rahmens, der den Luftverteilungsraum auf der Außenseite begrenzt, darf nicht fester sein als das Abstandsmaterial, das der Luftverteilungsraum aufweist. Ansonsten kommt es zu Haptik- und Sitzkomfortproblemen. Weist der Luftverteilungsraum kein Abstandsmaterial auf dann sollte das Material des Rahmens, der den Luftverteilungsraum auf der Außenseite begrenzt, vorteilhafterweise so ausgewählt werden, dass der Schaum nicht durch das Material der Oberseitenschicht und/oder der Unterseitenschicht bis in den Luftverteilungsraum eindringt und sozusagen kollabiert. In diesem Fall wird bevorzugt als Material für die rahmenförmige Einlage ein im Wesentlichen geschlossenzelliger Schaumstoff, Vlies, Filz oder synthetische Polymere, wie beispielsweise Silikon, verwendet.

Weitere Einzelheiten und Merkmale der Erfindung ergeben sich aus der nachfolgenden Beschreibung von Ausführungsbeispielen anhand der Zeichnung. In der Zeichnung zeigt
- Figur 1A: eine Draufsicht auf ein Polsterelement eines Fahrzeugsitzes mit Klimaeinleger einer ersten Ausführungsform gemäß der Erfindung und
- Figur 1B: einen Schnitt entlang der Schnittlinie 1B-1B in Figur 1A gemäß der Erfindung,
- Figuren 2A und 2B: eine Darstellung einer zweiten Ausführungsform entsprechend den Figuren 1A und 1B eines Polsterelements mit Klimaeinleger gemäß der Erfindung,
- Figuren 3A und 3B: eine Darstellung einer dritten Ausführungsform entsprechend den Figuren 1A und 1B eines Polsterelements mit Klimaeinleger gemäß der Erfindung,
- Figur 4: eine Darstellung einer vierten Ausführungsform in einer Schnittdarstellung gemäß der Erfindung,
- Figur 5: einen Fahrzeugsitz in einer schematischen Schnittdarstellung, der eine Klimatisierungseinrichtung sowohl des Sitzkissenteils als auch des Rückenlehnenteils aufweist,
- Figuren 6A bis 6H: Draufsichten auf Klimaeinleger, die sich durch unterschiedliche Anordnungen der Trennelemente und der Positionierung der Luftaustrittsplatte mit den Luftaustrittsöffnungen unterscheiden,
- Figuren 7A bis 7C: Draufsichten auf Klimaeinleger, die sich von denjenigen der Figuren 6A bis 6H dadurch unterscheiden, dass sie einen umlaufenden Rahmen aufweisen und in den jeweiligen Teilbereichen des Luftverteilungsraums zusätzliche Aussteifungsstege besitzen,
- Figuren 8A bis 8E: schematische Teildarstellungen der Anordnung der Trennelemente im Bereich der Luftaustrittsplatte, um verschiedene Möglichkeiten der Zuordnung der Luftaustrittsöffnungen zu den Teilbereichen des Luftverteilungsraums zu zeigen,
- Figur 9: einen Querschnitt einer Lüftereinheit mit Luftaustrittsplatte als Teil des Lüftergehäuses und
- Figuren 10A und 10B: einen Querschnitt entsprechend Figur 9 einer Lüftereinheit, bei der die Luftaustrittsplatte auf das Lüftergehäuse aufgesetzt ist.

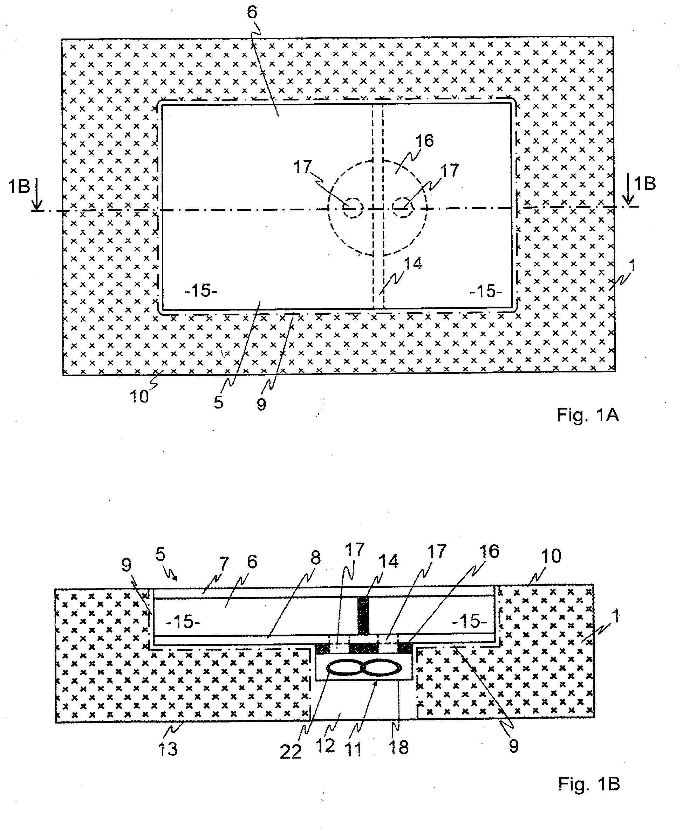

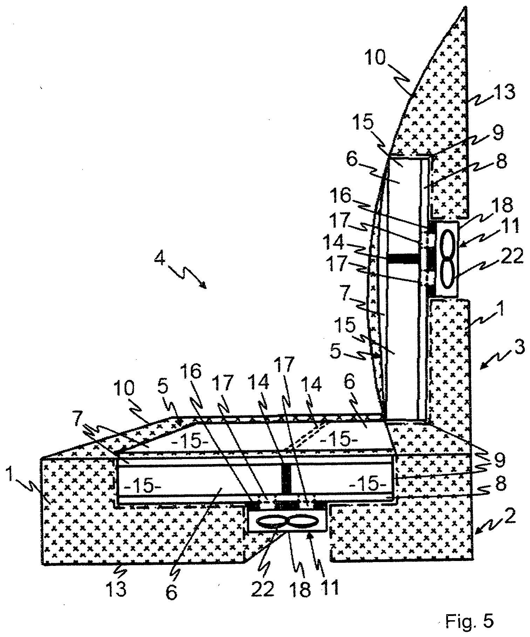

Die verschiedenen Ausführungsformen, wie sie in den Figuren 1 bis 4 dargestellt sind, zeigen jeweils einen Teil eines Polsterelements 1, bei dem es sich um ein Polsterelement eines Sitzkissenteils 2 oder eines Rückenlehnenteils 3 eines Fahrzeugsitzes 4 handeln kann, der in einer schematischen Schnittdarstellung in Figur 5 gezeigt ist.

Wie die Figur 5 verdeutlicht, kann die Klimatisierungseinrichtung sowohl in das Sitzkissenteil 2 als auch in das Rückenlehnenteil 3 integriert werden, wobei allerdings die Klimatisierungseinrichtung bevorzugt zur Klimatisierung des Sitzkissenteils 2 eingesetzt wird. In der Figur 5 ist sowohl in dem Sitzkissenteil 2 als auch dem Rückenlehnenteil 3 jeweils ein Klimaeinleger 5 beispielhaft dargestellt, die der in der Figur 1B dargestellten ersten Ausführungsform des Klimaeinlegers 5 entsprechen und nachfolgend noch beschrieben werden.

Die Klimatisierungseinrichtung, wie sie in der ersten Ausführungsform entsprechend Figur 1A und 1B dargestellt ist, besitzt einen Klimaeinleger 5 mit einem Luftverteilungsraum 6, der auf der oberen Seite durch eine Oberseitenschicht 7 und auf der der Oberseitenschicht 7 gegenüber liegenden Unterseite durch eine Unterseitenschicht 8 abgedeckt ist.

Der Klimaeinleger 5 ist in der ersten Ausführungsform der Figuren 1A und 1B in eine Ausnehmung 9 von der Oberseite 10 des Polsterelements 1 aus eingelegt, so dass der Luftverteilungsraum 6 seitlich durch Teile des Polsterelements 1 begrenzt ist.

An der Unterseite des Klimaeinlegers 5 bzw. an der Unterseite des Luftverteilungsraums 6 ist eine Lüftereinheit 11 angeordnet, die sich teilweise in eine Öffnung 12 hinein, die von der Ausnehmung 9 bis zu der Unterseite 13 des Polsterelements 1 verläuft, erstreckt.

Ein wesentlicher Aspekt der Erfindung ist derjenige, dass der Luftverteilungsraum 6 durch mindestens ein Trennelement 14, das auch als Stegelement bezeichnet werden kann, das sich zwischen der Oberseitenschicht 7 und der Unterseitenschicht 8 erstreckt, in mindestens zwei Teilbereiche 15 unterteilt ist.

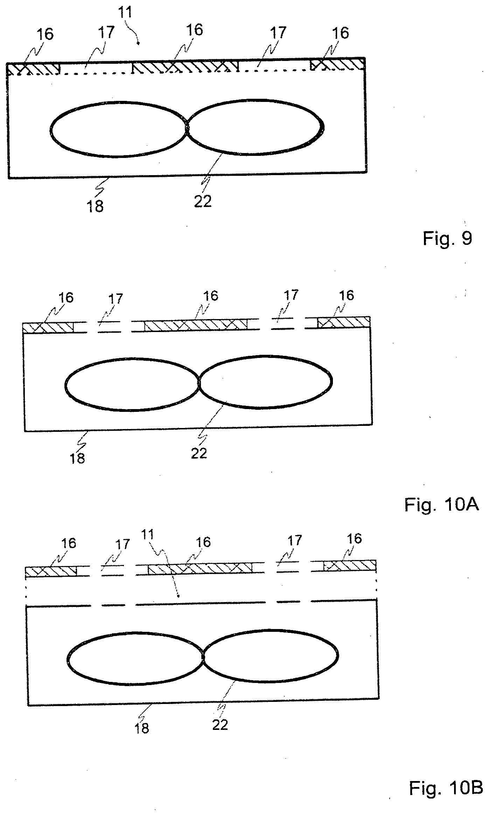

Die Lüftereinheit 11 besitzt eine Luftaustrittsplatte 16 mit zwei Luftaustrittsöffnungen 17. Diese Luftaustrittsplatte 16 kann Teil des Lüftergehäuses 18 sein oder kann auf das Lüftergehäuse 18 aufgesetzt werden, wie dies nachfolgend noch anhand der Figuren 9 sowie 10A und 10B beschrieben wird.

Die Lüftereinheit 11 und das Trennelement 14 sind derart zueinander positioniert, dass die der Lüftereinheit 11 zugeordnete Luftaustrittsplatte 16, die im Beispiel der ersten Ausführungsform der Figuren 1A und 1B zwei Luftaustrittsöffnungen 17 aufweist, derart an die Unterseite der Unterseitenschicht 8 des Luftverteilungsraums 6 angelegt ist, dass den beiden Teilbereichen 15 des Luftverteilungsraums 6, getrennt durch das Trennelement 14, jeweils von einer der zwei Luftaustrittsöffnungen 17 Luft von der Lüftereinheit 11 zugeführt wird.

Durch diese Anordnung kann den Teilbereichen 15 des Luftverteilungsraums 6 des Klimaeinlegers 5 unmittelbar und definiert verteilt Luft zugeführt werden, ohne dass dazu besondere Strömungskanäle unterhalb des Luftverteilungsraums 6 vorgesehen werden müssen. Solche Strömungskanäle, die mit dem Erfindungsgegenstand vermieden werden, haben ansonsten den Nachteil, dass sie die polsternden Eigenschaften der Polsterstruktur wesentlich verändern können. Weiterhin besteht die Gefahr, dass sich deren Querschnitt, der für die Luftströmung erforderlich ist, unter Belastung durch eine Person nachteilig verändert, wodurch die Luftströmung vollständig unterbunden werden kann.

Die den Teilbereichen 15 des Luftverteilungsraums 6 zugeführte Luft wird dann über die Oberseitenschicht 7, die aus einem für Luft durchlässigen Material besteht, oder über nicht näher dargestellte Löcher in der Oberseitenschicht 7 abgegeben.

Das Polsterelement 1 mit dem Klimaeinleger 5, wie es in den Figuren dargestellt ist, ist durch einen geeigneten Sitzbezug, der nicht näher gezeigt ist, abgedeckt.

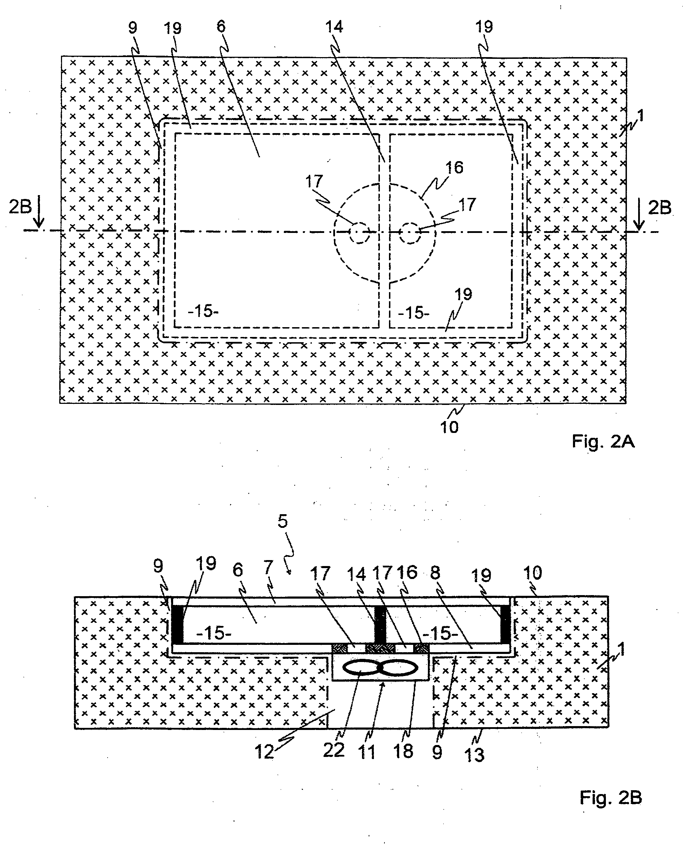

Die zweite Ausführungsform, wie sie in den Figuren 2A und 2B dargestellt ist, unterscheidet sich von der ersten Ausführungsform der Figuren 1A und 1B zum einen dadurch, dass der Luftverteilungsraum 6 umlaufend durch einen Rahmen 19 begrenzt ist, an dem sowohl die Oberseitenschicht 7 als auch die Unterseitenschicht 8 verbunden sind, und zum anderen durch die Positionierung der Luftaustrittsplatte 16 auf der Unterseitenschicht 8.

Wie die Figur 2A zeigt, verläuft das Trennelement 14 zwischen den zwei gegenüber liegenden Rahmenteilen des Rahmens 19. Rahmen 19 und Trennelement 14 können einstückig aus demselben Material, vorzugsweise aus einem Schaumstoffmaterial, das im Wesentlichen luftundurchlässig ist, beispielsweise als Stanzteil, aufgebaut werden. Es ist aber auch vorgesehen, dass das Trennelement 14 als gesondertes Bauteil zwischen die Rahmenteile des Rahmens 19 eingefügt wird.

Weiterhin ist in der zweiten Ausführungsform der Figuren 2A und 2B die Luftaustrittsplatte 16 in die Unterseitenschicht 8 eingesetzt, während in der ersten Ausführungsform der Figuren 1A und 1B die Luftaustrittsplatte 16 auf die Unterseitenschicht 8 aufgesetzt ist, wobei dann die Unterseitenschicht 8 Öffnungen aufweist, die den Luftaustrittsöffnungen 17 in der Luftaustrittsplatte 16 zugeordnet sind und in ihrer Größe mindestens der Größe der Luftaustrittsöffnungen 17 in der Luftaustrittsplatte 16 entsprechen.

Es ist darauf hinzuweisen, dass in der vorliegenden Beschreibung der verschiedenen Ausführungsbeispiele, wie sie in den Figuren dargestellt sind, nicht alle Bauteile erneut zu einer Ausführungsform beschrieben werden, wenn sie anhand einer anderen Ausführungsform bereits beschrieben oder erläutert wurden. Entsprechend kann die Beschreibung der verschiedenen Bauteile zu einer Ausführungsform auf die jeweiligen Bauteile einer anderen Ausführungsform übertragen werden, ohne dass dies ausdrücklich erwähnt ist. Außerdem können Elemente der verschiedenen Ausführungsformen miteinander kombiniert werden, auch wenn dies nicht ausdrücklich beschrieben ist. Dies gilt insbesondere in Bezug auf die Unterseitenschicht 8, die entfallen kann, wenn das Material des Polsterelements 1 im Bereich der Ausnehmung 9 den Luftverteilungsraum 6 begrenzt und verhindert, dass wesentliche Luftmengen aus dem Luftverteilungsraum 6 über die Unterseite austreten. Auch ist vorgesehen, dass in Fällen, in denen eine den Luftverteilungsraum 6 auf der Unterseite begrenzende Unterseitenschicht 8 vorgesehen ist, die Luftaustrittsplatte 16 entweder in die Unterseitenschicht 8 integriert wird, wie dies in Figur 2B gezeigt ist, oder die Luftaustrittsplatte 16 auf die Unterseitenschicht 8 aufgesetzt ist, wie dies in Figur 1B gezeigt ist.

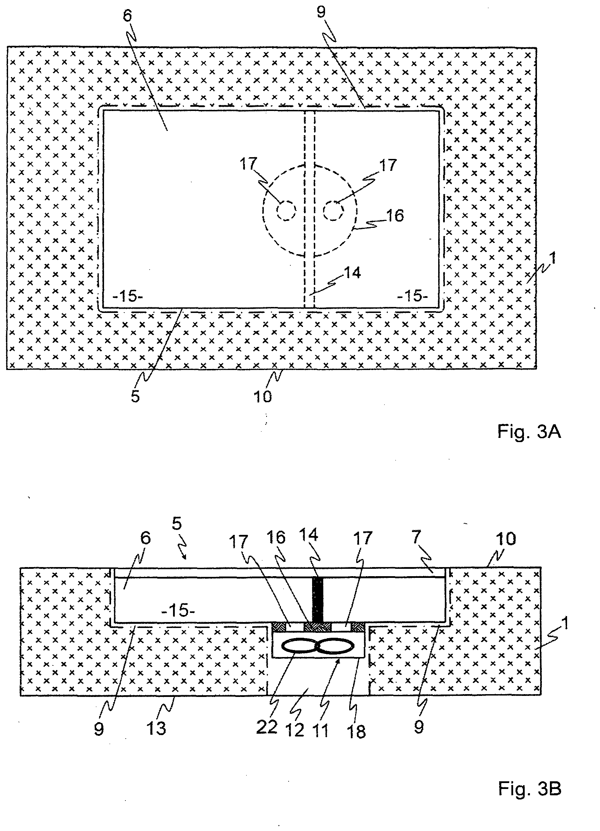

Die dritte Ausführungsform, wie sie in den Figuren 3A und 3B gezeigt ist, ist vergleichbar mit der ersten Ausführungsform der Figuren 1A und 1B, jedoch weist bei dieser dritten Ausführungsform der Klimaeinleger 5 nur eine Oberseitenschicht 7 aber keine Unterseitenschicht auf. Folglich stützt sich das Trennelement 14 auf der Unterseite des Luftverteilungsraums 6 nur auf der Luftaustrittsplatte 16 ab.

Gerade in den Fällen, in denen der Klimaeinleger 5 keine Unterseitenschicht 8 aufweist, die den Luftverteilungsraum 6 auf der Unterseite abschließt, sollte die Lüftereinheit 11 mit dem Lüftergehäuse 18 und der Luftaustrittsplatte 16 so dimensioniert werden, dass mit diesen Bauteilen der Querschnitt der Öffnung 12 in dem Polsterelement 1 vollständig ausgefüllt ist, so dass die Öffnung 12 gegenüber dem Luftverteilungsraum 6 abgedichtet wird.

Insbesondere in einer Ausführungsform, die der dritten Ausführungsform der Figuren 3A und 3B entspricht, kann der Luftverteilungsraum 6 zumindest teilweise in stark beanspruchten Bereichen durch ein Abstandsmaterial ausgefüllt werden, das nicht näher dargestellt ist.

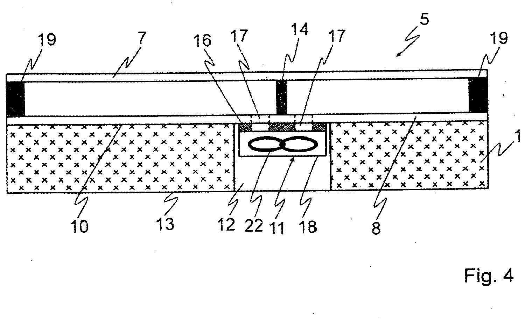

In der vierten Ausführungsform, die in Figur 4 dargestellt ist, ist der Klimaeinleger 5 auf die Oberseite 10 des Polsterelements 1 aufgesetzt, wobei der Klimaeinleger 5 demjenigen entspricht, der in der ersten Ausführungsform der Figuren 1A und 1B gezeigt ist, mit einem Rahmen 19, den die zweite Ausführungsform der Figuren 2A und 2B aufweist.

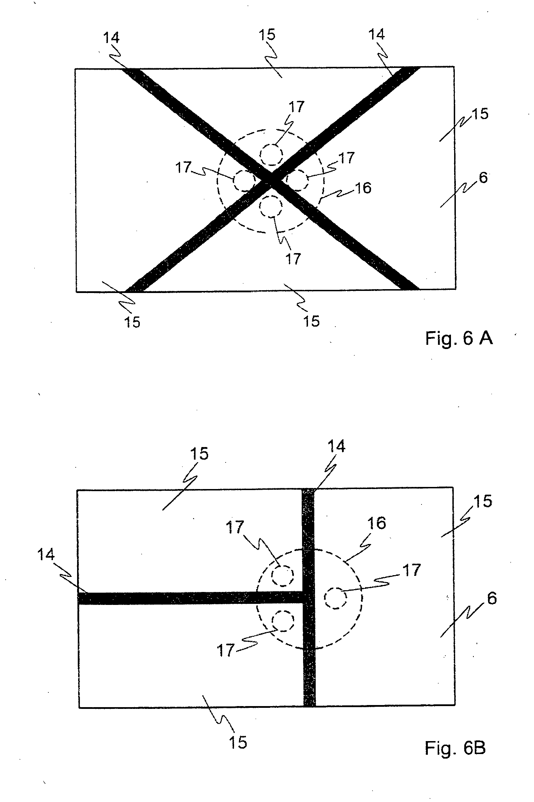

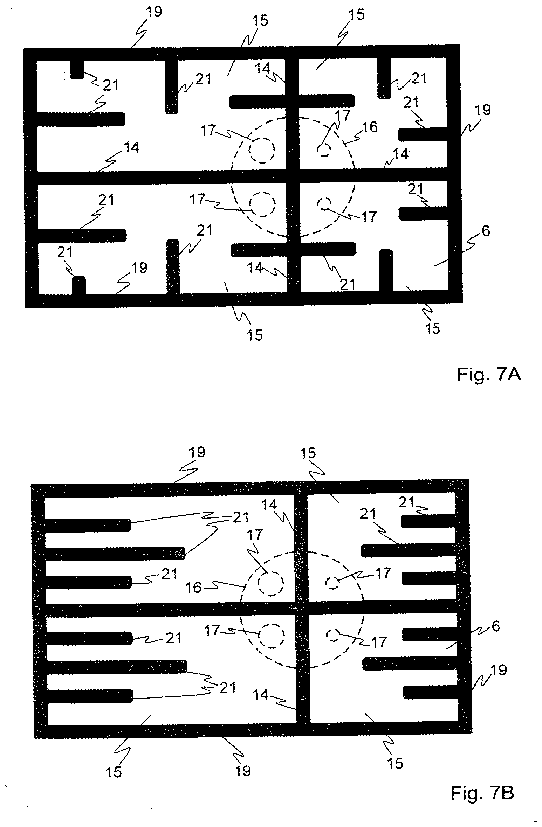

Sowohl die Figuren 6A bis 6H als auch die Figuren 7A bis 7C zeigen jeweils Draufsichten, aus Richtung der Ebene der Oberseitenschicht 7 des Klimaeinlegers 5 gesehen, jedoch ohne die Oberseitenschicht 7 selbst, d.h. die Oberseitenschicht ist, zur besseren Übersicht, bei diesen Figuren nicht dargestellt.

Figuren 6A bis 6H zeigen jeweils Draufsichten auf den Klimaeinleger 5, ohne die Oberseitenschicht 7, die sich durch unterschiedliche Anordnungen der Trennelemente 14 und der Positionierung der Luftaustrittsplatte 16 mit den Luftaustrittsöffnungen 17 unterscheiden.

Ein wesentliches Merkmal der Erfindung ist dasjenige, dass der Luftverteilungsraum 6 durch Trennelemente 14, beispielsweise in Form von Stegen, in mehrere Teilbereiche 15 unterteilt wird und die Lüftereinheit 11 mit einer Luftaustrittsplatte 16 versehen ist, die unmittelbar, d. h. ohne zusätzliche Strömungskanäle, jeden der Teilbereiche 15 belüftet. Hierzu zeigt Figur 6A eine Ausführungsform, bei der der Luftverteilungsraum 6 in vier etwa gleich große Teilbereiche 15 durch zwei kreuzförmig und diagonal zu den rechteckigen Außenabmessungen des Luftverteilungsraums 6 verlaufende Trennelemente 14 verteilt ist. Die Luftaustrittsplatte 16, die vier Luftaustrittsöffnungen 17 besitzt, ist im Kreuzungsbereich der Trennelemente 14 so angeordnet, dass jeweils eine der vier Luftaustrittsöffnungen 17 einem der Teilbereiche 15 zugeordnet ist. Dadurch kann jeder Teilbereich 15 mit derselben Luftmenge versorgt werden. Die Luftaustrittsöffnungen 17 haben hierzu dieselbe Öffnungsweite unter der Maßgabe, dass die vier Teilbereiche 15 in etwa dieselben Volumina haben.

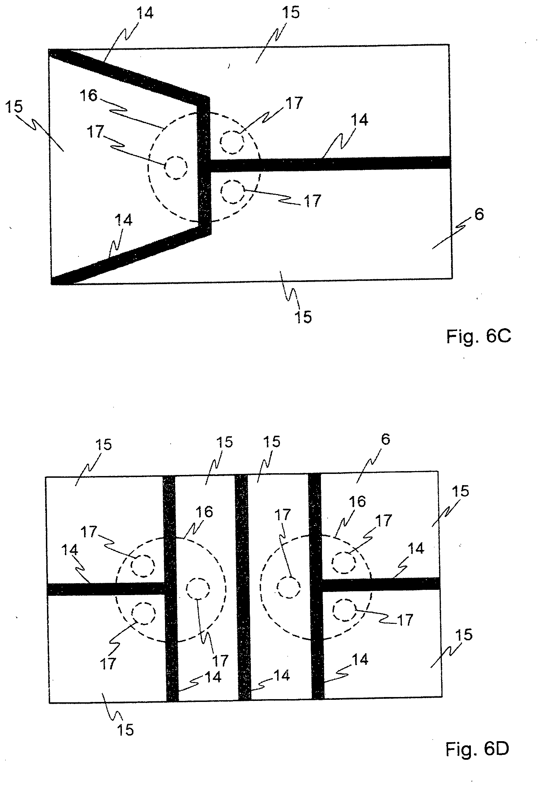

In den Ausführungsformen der Figuren 6B und 6C ist der Luftverteilungsraum 6 in drei Teilbereiche 15 unterteilt. Hierzu verlaufen die Trennelemente 14 der Figur 6B T-förmig zueinander, darüber hinaus so, dass die Teilbereiche 15 vergleichbare Volumina besitzen. Entsprechend ist jedem Teilbereich 15 eine Luftaustrittsöffnung 17 in der Luftaustrittsplatte 16 zugeordnet, um die Teilbereiche 15 mit Luft der Lüftereinheit 11 zu versorgen.

Die Figuren 6A und 6B zeigen, dass die Trennelemente 14 in einem Punkt zusammenlaufen oder strahlenförmig von einem Punkt ausgehen, im Bereich dessen die Luftaustrittsplatte 16 angeordnet wird, so dass jeder Teilbereich 15 über mindestens eine Luftaustrittsöffnung 17 in der Luftaustrittsplatte 16 mit Luft versorgt wird.

Das in Figur 6C dargestellte Beispiel verdeutlicht, dass die Trennelemente 14 nicht geradlinig verlaufen müssen. Jedoch ist sicherzustellen, dass die Luftaustrittsplatte 16 so positioniert werden kann, dass über deren Luftaustrittsöffnungen 17 jeder Teilbereich 15 mit Luft versorgt wird.

Es sollte ersichtlich sein, dass die Öffnung 12 in dem Polsterelement 1 dort angeordnet wird, wo die Lüftereinheit 11, die sich zumindest teilweise in diese Öffnung 12 hineinerstreckt, mit der dazu zugeordneten Luftaustrittsplatte 16 positioniert wird.

Obwohl die Luftaustrittsplatte 16 in den Figuren als kreisrunde Platte dargestellt ist, kann sie auch andere Formen aufweisen, um darin entsprechende Luftaustrittsöffnungen 17 zu bilden, die den Teilbereichen 15 des Luftverteilungsraums 6 zugeordnet sind.

Die Figur 6D zeigt ein Beispiel, bei dem der Luftverteilungsraum 6 durch Trennelemente 14 in sechs Teilbereiche 15 unterteilt ist. Außerdem zeigt das Beispiel der Figur 6D einen Aufbau, bei dem zwei Lüftereinheiten 11, die jeweils eine Luftaustrittsplatte 16 aufweisen, eingesetzt werden, wobei die Zuordnung der Trennelemente 14 zu der jeweiligen Luftaustrittsplatte 16 derjenigen entspricht, die auch in Figur 6B dargestellt ist. Zusätzlich ist zwischen den beiden Luftaustrittsplatten 16 ein weiteres Trennelement 14 eingefügt, durch das die beiden Teilbereiche 15 getrennt sind.

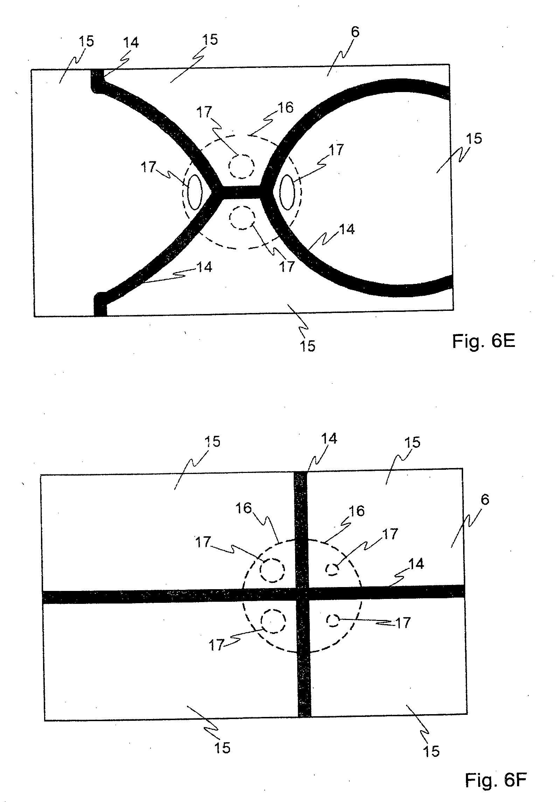

Die Figur 6E zeigt ein Beispiel mit vier Teilbereichen 15. Dieses Beispiel soll verdeutlichen, dass die jeweiligen Trennelemente 14 strahlenförmig im Bereich der Luftaustrittsplatte 16 zusammenlaufen, sie jedoch nicht einen gemeinsamen Verbindungspunkt haben müssen. In diesem Beispiel ist nämlich im Bereich der Luftaustrittsplatte 16 ein kleiner Zwischensteg, d. h. ein kleines Trennelement 14, eingefügt. Wesentlich ist jedoch, dass sich die Luftaustrittsplatte 16 in jeden Teilbereich 15 erstreckt, so dass jedem Teilbereich 15 eine Luftaustrittsöffnung 17 zugeordnet werden kann. Auch ist zu sehen, dass die Luftaustrittsöffnungen 17 unterschiedliche Größen und Formen haben können. Bevorzugt wird die Öffnungsfläche der Luftaustrittsöffnungen 17 dem zu belüftenden Volumen bzw. der Größe des jeweiligen Teilbereichs angepasst, so dass jedem Teilbereich 15 eine dem Volumen entsprechende Menge an Luft zugeführt werden kann.

Hierzu zeigt Figur 6F eine Anordnung mit vier Teilbereichen 15, von denen zwei Teilbereiche 15 größer sind als die anderen zwei Teilbereiche 15. Folglich besitzt die Luftaustrittsplatte 16 größere Luftaustrittsöffnungen 17, die den zwei größeren Teilbereichen 15 zugeordnet sind, als die Luftaustrittsöffnung 17, die den beiden kleineren Teilbereichen 15 zugeordnet sind und die folglich im Durchmesser kleiner sind.

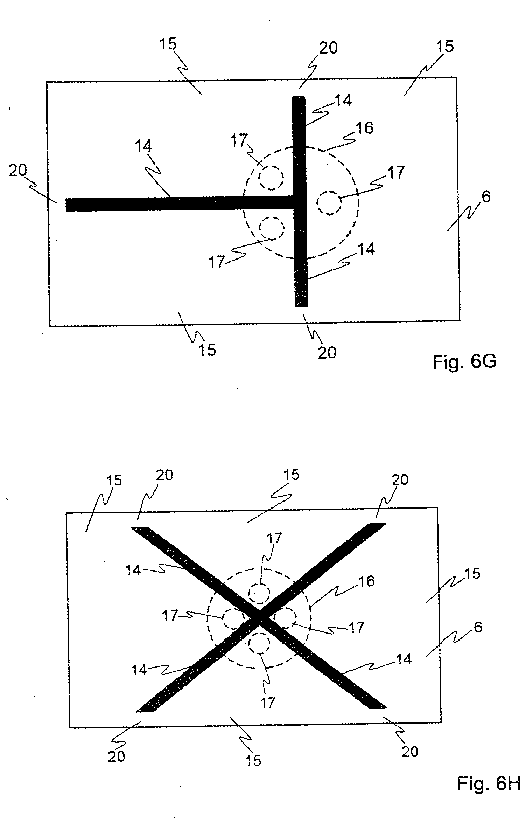

Die Figur 6G zeigt eine Ausführungsform, die in Bezug auf die Anordnung der Trennelemente 14 und in Bezug auf die Anordnung der Luftaustrittsplatte 16 und deren Luftaustrittsöffnungen 17 der Ausführungsform der Figur 6B entspricht, während die Ausführungsform der Figur 6H mit derjenigen der Figur 6A vergleichbar ist. Allerdings enden in den Ausführungsformen der Figuren 6G und 6H die freien Enden der Trennelemente 14 in einem geringen Abstand zu dem Rand des Luftverteilungsraums 6, so dass dort Druckausgleichsöffnungen 20 entstehen, um eventuelle Druckunterschiede in den verschiedenen Teilbereichen 15 auszugleichen. Hierzu reicht es aus, dass die Trennelemente 14 zu dem Rand des Luftverteilungsraums 6, oder zu einem Rahmen 19, der den Luftverteilungsraum 6 an der Außenseite begrenzt, einen Abstand von ein paar Millimetern haben.

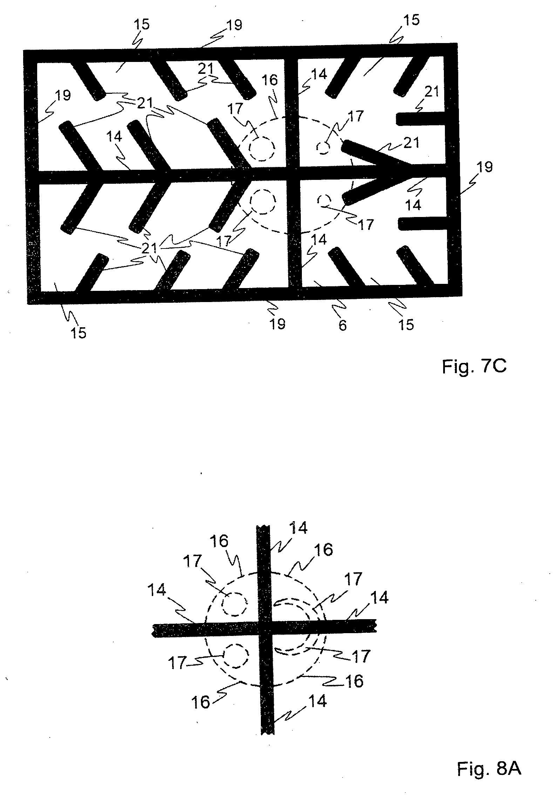

In den Figuren 7A bis 7C sind Klimaeinleger 5 jeweils in einer Draufsicht gezeigt, die sich von denjenigen der Figuren 6A bis 6H dadurch unterscheiden, dass sie einen umlaufenden Rahmen 19 aufweisen. Weiterhin sind in den jeweiligen Teilbereichen 15 des Luftverteilungsraums 6 zusätzliche Aussteifungsstege 21 vorhanden, die sich entweder von den Trennelementen 14 oder von dem Rahmen 19 ausgehend in den jeweiligen Teilbereich 15 erstrecken. Diese Aussteifungsstege 21 können senkrecht zu den Trennelementen 14 oder dem Rahmen 19 verlaufen, wie dies die Figuren 7A und 7B zeigen; es ist aber auch vorgesehen, dass die Aussteifungsstege 21 unter einem Winkel ungleich 90° verlaufend angeordnet sind, wie dies in Figur 7C gezeigt ist. In jedem Fall ist die Länge dieser Aussteifungsstege 21 so gewählt, dass sie ein freies Ende haben und mit diesem Ende nicht mit einem Trennelement 14 verbunden sind. Aussteifungsstege 21, die von gegenüber liegenden Trennelementen 14 eines Teilbereichs 15 ausgehen, werden so positioniert, dass sie zueinander versetzt sind, wie dies in Figur 7C in den beiden linken Teilbereichen 15 dargestellt ist.

In den Figuren 8A bis 8E sind schematische Teildarstellungen der Anordnung der Trennelemente 14 im Bereich der Luftaustrittsplatte 16 gezeigt, die verschiedene Möglichkeiten der Zuordnung der Luftaustrittsöffnungen 17 zu den Teilbereichen 15 des Luftverteilungsraums 6 verdeutlichen.

Während in den vorstehend beschriebenen Ausführungsformen den jeweiligen Teilbereichen15 des Luftverteilungsraums 6 eine eigene Luftaustrittsöffnung 17 in der Luftaustrittsplatte 16 zugeordnet ist, zeigt die Figur 8A die Möglichkeit auf, mit nur einer Luftaustrittsöffnung 17 zwei Teilbereiche 15 des Luftverteilungsraums 6 mit Luft zu versorgen, indem über das Trennelement 14 die Aufteilung der Luft aus der einen Luftaustrittsöffnung 17 vorgenommen wird. Die anderen beiden Teilbereiche 15 auf der linken Seite des einen Trennelements 14 werden über jeweils eine eigenständige Luftaustrittsöffnung 17 versorgt.

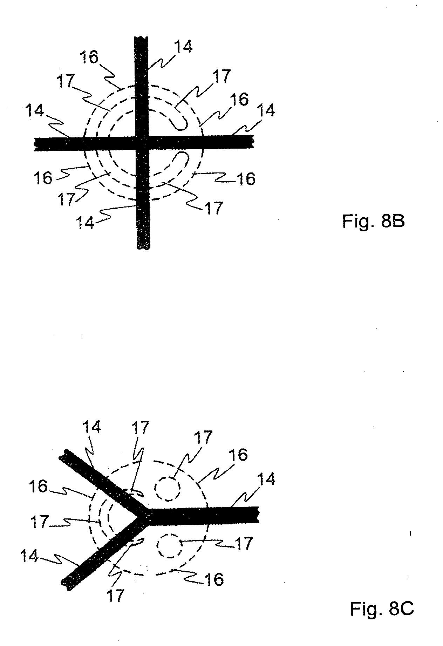

Die Figur 8B zeigt ein Beispiel, bei dem durch eine ringförmige oder C-förmige Luftaustrittsöffnung 17 in der Luftaustrittsplatte 16 alle vier Teilbereiche 15 mit Luft versorgt werden, indem die Luftaustrittsöffnung 17 durch die Trennelemente 14 in vier Teilöffnungen unterteilt wird.

Figur 8C soll zeigen, dass einem Teilbereich 15 mehrere Luftaustrittsöffnungen 17 zugeordnet werden können.

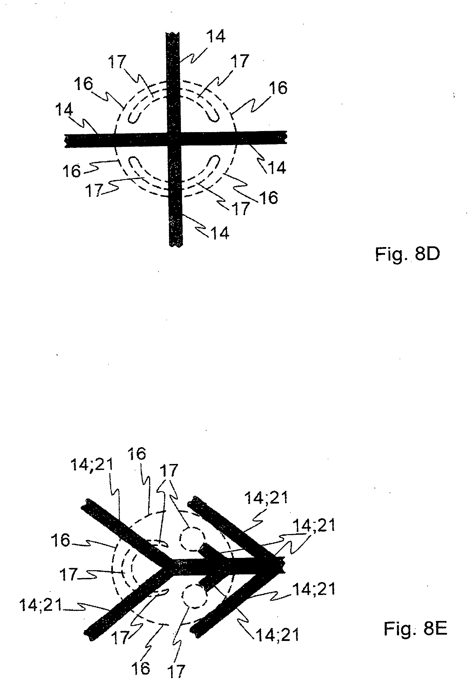

Figur 8D ist mit der Ausführungsform der Figur 8B vergleichbar, indem jeweils zwei Teilbereichen 15 durch eine halbkreisförmige Öffnung, unterteilt durch das eine Trennelement 14, Luft zugeführt wird.

Figur 8E ist vergleichbar mit dem Beispiel der Figur 8C, wobei im Bereich der Luftaustrittsplatte 16 kurze zusätzliche Aussteifungsstege 21 angeordnet sind; bei den Stegen auf der rechten Seite der Luftaustrittsplatte 16 kann es sich entweder um Trennelemente 14 oder um Aussteifungsstege 21 handeln.

Figur 9 zeigt einen Querschnitt einer Lüftereinheit 11, wie sie in den zuvor beschriebenen Ausführungsformen eingesetzt werden kann. Bei dieser Lüftereinheit 11 ist die Luftaustrittsplatte 16 mit den Luftaustrittsöffnungen 17 Teil des Lüftergehäuses 18, in dem das Lüfterrad 22 aufgenommen ist. Besonders bevorzugt ist dabei ein Aufbau des Lüftergehäuses 18, bei dem die Luftaustrittsplatte 16 austauschbar, beispielsweise über eine Schraub- oder Schnappverbindung, gehalten ist, so dass in Modulbauweise durch einfachen Austausch der Luftaustrittsplatte 16 die Lüftereinheit 11 den Erfordernissen in Bezug auf die Luftaustrittsöffnungen 17 angepasst werden kann.

Die Luftaustrittsplatte 16 wird auf der dem Trennelement 14 weisenden Seite mittels Klebemittel, beispielsweise mittels doppelseitigem Klebeband, gehalten.

Zusätzlich oder in Verbindung mit weiteren Verbindungsmöglichkeiten kann das Lüftergehäuse 18 an dessen Randbereich, mittels der Unterseitenschicht 8, zumindest teilweise abgedeckt, verbunden werden.

Die Figuren 10A und 10B zeigen einen Querschnitt entsprechend Figur 9 einer Lüftereinheit 11, bei der die Luftaustrittsplatte 16 auf das Lüftergehäuse 18 aufgesetzt ist (Figur 10A) und somit als einzelnes Bauteil von dem Lüftergehäuse 18 abgenommen werden (Figur 10B), so dass für die verschiedenen Anwendungsfälle die Lüftereinheit 11 mit dem Lüftergehäuse 18 beibehalten wird und nur unterschiedliche Luftaustrittsplatten 16 auf das Lüftergehäuse 18 aufgesetzt werden.

## Patentansprüche

1. Fahrzeugsitz (4) mit einem jeweils ein Polsterelement (1) aufweisenden Sitzkissenteil (2) und einem Rückenlehnenteil (3), von denen zumindest das eine Teil eine Klimatisierungseinrichtung mit einer Lüftereinheit (11) und einem Klimaeinleger (5) besitzt, wobei der Klimaeinleger (5) einen Luftverteilungsraum (6) aufweist, der auf der einen Seite durch mindestens eine Oberseitenschicht (7) begrenzt ist, wobei dem Luftverteilungsraum (6) Luft durch die Lüftereinheit (11) über die der Oberseitenschicht (7) gegenüber liegende Unterseite (13) zugeführt wird und die Luft aus dem Luftverteilungsraum (6) über die Oberseitenschicht (7) abgegeben wird, **dadurch gekennzeichnet, dass** der Luftverteilungsraum (6) durch mindestens ein Trennelement (14), das sich zwischen der Oberseitenschicht (7) und der Unterseite (13) erstreckt, in mindestens zwei Teilbereiche (15) unterteilt ist, dass sich eine der Lüftereinheit (11) zugeordnete Luftaustrittsplatte (16), die mindestens eine Luftaustrittsöffnung (17) aufweist, derart an die der Unterseite des Luftverteilungsraums (6) zugeordnete Ebene des Trennelements (14) anlegt, dass die mindestens eine Luftaustrittsöffnung (17) Luft sowohl dem einen als auch dem anderen Teilbereich (15) zuführt.

2. Fahrzeugsitz nach Anspruch 1, **dadurch gekennzeichnet, dass** der Luftverteilungsraum (6) durch mehrere Trennelemente (14) in mehrere Teilbereiche (15) unterteilt ist, wobei jeweils das eine Ende des jeweiligen Trennelements (14) durch die Luftaustrittplatte (16) der Lüftereinheit (11) abgedeckt ist, diese einen Enden der Trennelemente (14) im Bereich der Luftaustrittsplatte (16) der Lüftereinheit (11) die jeweiligen Teilbereiche (15) voneinander trennend miteinander verbunden sind und jedem Teilbereich (15) mindestens eine Luftaustrittsöffnung (17) oder ein Teilbereich (15) einer Luftaustrittsöffnung (17) in der Luftaustrittsplatte (16) zugeordnet ist.

3. Fahrzeugsitz nach Anspruch 1 oder 2, **dadurch gekennzeichnet, dass** die jeweilige Größe der den Teilbereichen (15) zugeordneten Luftaustrittsöffnungen (17) im Verhältnis zu der Größe des jeweiligen Teilbereichs (15) steht.

4. Fahrzeugsitz nach einem der Ansprüche 1 bis 3, **dadurch gekennzeichnet, dass** eine Luftaustrittsöffnung (17) in der Luftaustrittsplatte (16), die mehreren Teilbereichen (15) des Luftverteilungsraums (6) zugeordnet ist, durch die den Luftverteilungsraum (6) in die mehreren Teilbereiche (15) unterteilenden Trennelemente (14) in die den jeweiligen Teilbereichen (15) zugeordneten Luftaustrittsöffnungen (17) unterteilt ist.

5. Fahrzeugsitz nach einem der Ansprüche 1 bis 4, **dadurch gekennzeichnet, dass** in dem jeweiligen Teilbereich (15) Aussteifungsstege (21) angeordnet sind, die sich zwischen der Oberseitenschicht (7) und der der Unterseite des Luftverteilungsraums (6) zugeordneten Ebene erstrecken.

6. Fahrzeugsitz nach einem der Ansprüche 1 bis 5, **dadurch gekennzeichnet, dass** der Luftverteilungsraum (6) auf der der Oberseitenschicht (7) gegenüber liegenden Unterseite durch mindestens eine Unterseitenschicht (8) abgedeckt ist.

7. Fahrzeugsitz nach einem der Ansprüche 1 bis 6, **dadurch gekennzeichnet, dass** der Luftverteilungsraum (6) um den Außenumfang herum durch einen Rahmen (19) begrenzt ist.

8. Fahrzeugsitz nach Anspruch 7, **dadurch gekennzeichnet, dass** die Oberseitenschicht (7) mit dem Rahmen (19) verbunden ist.

9. Fahrzeugsitz nach Anspruch 6 und 7, dass die Unterseitenschicht (8) mit dem Rahmen (19) verbunden ist.

10. Fahrzeugsitz nach Anspruch 6 oder 7, **dadurch gekennzeichnet, dass** die Oberseitenschicht (7) und die mindestens eine Unterseitenschicht (8) um den Außenumfang des Luftverteilungsraums (6) herum miteinander verbunden sind.

11. Fahrzeugsitz nach einem der Ansprüche 1 bis 10, **dadurch gekennzeichnet, dass** sich die Lüftereinheit (11) zumindest teilweise in eine durch das Polsterelement (1) führende Öffnung (12) erstreckt.

12. Fahrzeugsitz nach einem der Ansprüche 1 bis 11, **dadurch gekennzeichnet, dass** die Luftaustrittsplatte (16) eine Bodenfläche eines Lüftergehäuses (18) der Lüftereinheit (11) bildet.

13. Fahrzeugsitz nach Anspruch 7, **dadurch gekennzeichnet, dass** von dem Rahmen (19) und/oder zumindest einem der Trennelemente (14) ausgehende Aussteifungsstege (21) in dem jeweiligen Teilbereich (15) des Luftverteilungsraums (6) verlaufen.

14. Fahrzeugsitz nach einem der Ansprüche 1 bis 13, **dadurch gekennzeichnet, dass** in zumindest einem der Teilbereiche (15) ein Abstandsmaterial eingesetzt ist.

15. Fahrzeugsitz nach einem der Ansprüche 1 bis 14, **dadurch gekennzeichnet, dass** Teilbereiche (15) über Druckausgleichsöffnungen (20) miteinander verbunden sind.

## Claims

1. Vehicle seat (4) having a seat cushion part (2) and a backrest part (3) each having a cushion element (1), wherein at least one of which has an air-conditioning device with a fan unit (11) and an air-conditioning insert (5), the air-conditioning insert (5) having an air distribution space (6), which is delimited on one side by at least one top layer (7), wherein air being supplied to the air distribution space (6) by the fan unit (11) via the underside (13) located opposite the top layer (7), and the air being discharged from the air distribution space (6) via the top layer (7), **characterized in that** the air distribution space (6) is separated into at least two partial regions (15) by at least one separating element (14) which extends between the top layer (7) and the underside (13), **in that** an air outlet plate (16) assigned to the fan unit (11) and having at least one air outlet opening (17) rests on the plane of the separating element (14) associated to the underside of the air distribution space (6) in such a way that the at least one air outlet opening (17) supplies air to both the one and the other partial region (15).

2. Vehicle seat according to claim 1, **characterized in that** the air distribution space (6) is subdivided into a plurality of partial regions (15) by a plurality of separating elements (14), wherein respective the one end of the respective separating element (14) is covered by the air outlet plate (16) of the fan unit (11), these one ends of the separating elements (14) in the region of the air outlet plate (16) of the fan unit (11) are connected to one another so as to separate the respective partial regions (15) from one another, and wherein at least one air outlet opening (17) or a partial region (15) of an air outlet opening (17) in the air outlet plate (16) is assigned to each partial region (15).

3. Vehicle seat as in claim 1 or 2, **characterized in that** the respective size of the air outlet openings (17) assigned to the partial regions (15) is in proportion to the size of the respective partial region (15).

4. Vehicle seat as in one of claims 1 to 3, **characterized in that** an air outlet opening (17) in the air outlet plate (16), which is assigned to a plurality of partial regions (15) of the air distribution space (6), is subdivided into the air outlet openings (17) assigned to the respective partial regions (15) by the separating elements (14) dividing the air distribution space (6) into the plurality of partial regions (15).

5. Vehicle seat as in one of claims 1 to 4, **characterized in that** reinforcing bars (21) are arranged in the respective partial region (15) and extend between the top layer (7) and the plane assigned to the underside of the air distribution space (6).

6. Vehicle seat as in one of claims 1 to 5, **characterized in that** the air distribution space (6) on the underside opposite the top layer (7) is covered by at least one bottom layer (8).

7. Vehicle seat as in one of claims 1 to 6, **characterized in that** the air distribution space (6) is delimited by a frame (19) around the outer circumference.

8. Vehicle seat as in claim 7, **characterized in that** the top layer (7) is connected to the frame (19).

9. Vehicle seat as in Claim 6 and 7, **characterized in that** the bottom layer (8) is connected to the frame (19).

10. Vehicle seat as in claim 6 or 7, **characterized in that** the top layer (7) and the at least one bottom layer (8) are connected to each other around the outer circumference of the air distribution space (6).

11. Vehicle seat as in any of claims 1 to 10, **characterized in that** the fan unit (11) extends at least in part into an opening (12) leading through the cushion element (1).

12. Vehicle seat as in any of claims 1 to 11, **characterized in that** the air outlet plate (16) forms a bottom surface of a fan housing (18) of the fan unit (11).

13. Vehicle seat as in claim 7, **characterised in that** reinforcing bars (21) extending from the frame (19) and/or at least one of the separating elements (14) extend in the respective partial region (15) of the air distribution space (6).

14. Vehicle seat as in one of claims 1 to 13, **characterized in that** a spacer material is used in at least one of the partial regions (15).

15. Vehicle seat as in one of claims 1 to 14, **characterized in that** partial regions (15) are connected to one another via pressure compensation openings (20).

## Revendications

1. Siège de véhicule (4), comportant une partie de coussin d'assise (2) et une partie de dossier (3), qui présentent chacune un élément de rembourrage (1), et dont au moins une partie possède un dispositif de climatisation avec une unité de ventilateur (11) et un insert de climatisation (5), siège dans lequel l'insert de climatisation (5) présente une chambre de répartition d'air (6), qui, sur un côté, est délimitée par au moins une couche de côté supérieur (7), et dans lequel de l'air est amené par l'unité de ventilateur (11) à la chambre de répartition d'air (6) par l'intermédiaire du côté inférieur (13) opposé à la couche de côté supérieur (7), et l'air de la chambre de répartition d'air (6) est délivré à travers la couche de côté supérieur (7), **caractérisé en ce que** la chambre de répartition d'air (6) est subdivisée en au moins deux zones partielles (15) par au moins un élément de séparation (14), qui s'étend entre la couche de côté supérieur (7) et le côté inférieur (13), et **en ce qu'**une plaque de sortie d'air (16) associée à l'unité de ventilateur (11) et présentant au moins une ouverture de sortie d'air (17), s'appuie contre le plan de l'élément de séparation (14), associé au côté inférieur de la chambre de répartition d'air (6), de manière telle que ladite au moins une ouverture de sortie d'air (17) amène de l'air aussi bien à l'une qu'à l'autre zone partielle (15).

2. Siège de véhicule selon la revendication 1, **caractérisé en ce que** la chambre de répartition d'air (6) est subdivisée en plusieurs zones partielles (15) par plusieurs éléments de séparation (14), **en ce qu'**une extrémité respective de chaque élément de séparation (14) est recouverte par la plaque de sortie d'air (16) de l'unité de ventilateur (11), **en ce que** ces extrémités respectivement considérées des éléments de séparation (14) sont reliées mutuellement dans la zone de la plaque de sortie d'air (16) de l'unité de ventilateur (11) en séparant les unes des autres les zones partielles (15) respectives, et **en ce qu'**à chaque zone partielle (15) est associée au moins une ouverture de sortie d'air (17) ou bien une zone partielle (15) est associée à une ouverture de sortie d'air (17) dans la plaque de sortie d'air (16).

3. Siège de véhicule selon la revendication 1 ou la revendication 2, **caractérisé en ce que** la grandeur respective des ouvertures de sortie d'air (17) associées aux zones partielle (15), est dans une relation de proportionnalité avec la grandeur de la zone partielle (15) respective.

4. Siège de véhicule selon-l'une des revendications 1 à 3, **caractérisé en ce qu'**une ouverture de sortie d'air (17) réalisée dans la plaque de sortie d'air (16) et associée à plusieurs zones partielles (15) de la chambre de répartition d'air (6), est subdivisée par les éléments de séparation (14), qui subdivisent la chambre de répartition d'air (6) en lesdites plusieurs zones partielles (15), en des ouvertures de sortie d'air (17) associées respectivement aux zones partielles (15).

5. Siège de véhicule selon l'une des revendications 1 à 4, **caractérisé en ce que** dans la zone partielle (15) sont agencées des nervures de renfort (21), qui s'étendent entre la couche de côté supérieur (7) et le plan associé au côté inférieur de la chambre de répartition d'air (6).

6. Siège de véhicule selon l'une des revendications 1 à 5, **caractérisé en ce que** la chambre de répartition d'air (6) est recouverte, du côté inférieur opposé à la couche de côté supérieur (7), par au moins une couche de côté inférieur (8).

7. Siège de véhicule selon l'une des revendications 1 à 6, **caractérisé en ce que** la chambre de répartition d'air (6) est délimitée autour de sa périphérie extérieure, par un cadre (19).

8. Siège de véhicule selon la revendication 7, **caractérisé en ce que** la couche de côté supérieur (7) est reliée au cadre (19).

9. Siège de véhicule selon la revendication 6 et la revendication 7, **caractérisé en ce que** la couche de côté inférieur (8) est reliée au cadre (19).

10. Siège de véhicule selon la revendication 6 ou la revendication 7, **caractérisé en ce que** la couche de côté supérieur (7) et ladite au moins une couche de côté inférieur (8) sont reliées mutuellement, autour de la périphérie extérieure de la chambre de répartition d'air (6).

11. Siège de véhicule selon l'une des revendications 1 à 10, **caractérisé en ce que** l'unité de ventilateur (11) s'étend au moins en partie à l'intérieur d'une ouverture (12) conduisant à travers l'élément de rembourrage (1).

12. Siège de véhicule selon l'une des revendications 1 à 11, **caractérisé en ce que** la plaque de sortie d'air (16) forme une surface de fond d'un boitier de ventilateur (18) de l'unité de ventilateur (11).

13. Siège de véhicule selon la revendication 7, **caractérisé en ce que** des nervures de renfort (21) issues du cadre (19) et/ou d'au moins un élément de séparation (14), s'étendent dans la zone partielle (15) respective de la chambre de répartition d'air (6).

14. Siège de véhicule selon l'une des revendications 1 à 13, **caractérisé en ce que** dans l'une au moins des zones partielles (15) est inséré un matériau d'espacement.

15. Siège de véhicule selon l'une des revendications 1 à 14, **caractérisé en ce que** des zones partielles (15) sont reliées mutuellement par l'intermédiaire d'ouvertures de compensation de pression (20).
